# EUROPEAN PATENT APPLICATION

(11) **EP 1 813 767 A1**
(43) Date of publication of application: **01.08.2007**
(21) Application number: 06001817.3
(22) Date of filing: 30.01.2006
(51) Int. Cl.: E06B 9/82, F16F 9/02

(54) **Roll-up device for roll-up systems**

(71) Applicant: Perfilex Espana, S.L., 46950 Chirivella (Valencia) (ES)
(72) Inventor: The designation of the inventor has not yet been filed
(74) Representative: Urizar Anasagasti, José Antonio

(57) **Abstract**

A device that facilitates the slow return of a roll-up system, such as for instance, those that include blinds of metal slats, mosquito netting and other similar ones, which is unrolled with respect to its stowed position, when its lock-in is released.

The device is made up of a piston (3) onto which a cylinder (4) is screwed, which is provided with an air entrance hole (4.2) at its basis (4.1), a closing ball (7), a retention spring (6) and a variable volume air chamber (8) whose covering is the basis (4.1), the walls of the cylinder and the head of the piston.

When the mosquito netting is lowered, air enters the chamber (8) and its volume increases to the maximum. When the latch for rolling it up is released, the cylinder rotates and moves axially, screwing onto the piston (3) and compressing the air retained in the chamber (8), which escapes slowly outwards due to the semi-leakproof seal of the thread between the cylinder and the lid that forms its basis (4.1).

## Description

### OBJECT OF THE INVENTION

This invention relates to roll-up systems, and in particular, to a new device that facilitates slowly rolling up a laminated material, such as blinds made of metal slats, mosquito netting and other similar components that form part of a roll-up system, when it is unrolled with respect to its stowed position and its lock-in is released in order to roll it up by way of the effect of a spring or similar, thus preventing the laminated material from suddenly rolling up as an effect of the potential energy held in the spring.

### BACKGROUND OF THE INVENTION

Among the slow return systems of roll-up systems known by the inventor, the one disclosed in the Spanish patent application P009901841 is noteworthy, using a centrifugal force braking system, made up of a set of satellite and planetary gears and several inertia masses. This brake is connected to the final spring-holding pivot, acting within the roll-carrier tube.

Its functioning is as follows: when the mosquito netting released from its lock-in position is unrolled, the roll-up speed is controlled due to the fact that the peripheral inertia masses, by way of centrifugal force, rub the inside of a carcass linked to the roll-carrier tube, thereby slowing it down.

This type of device, in addition to being too costly and complicated, brings about the rapid deterioration of the components that are in contact, which are characteristic of the centrifugal friction brake.

With the objective of substantially improving this type of devices, the author of the present invention has created a slow return device for roll-up systems as claimed in claim 1, and which is described below.

### DESCRIPTION OF THE INVENTION

The device of the present invention is a slow return or roll-up device for roll-up systems, such as for instance, and in a non-limiting sense, blinds or mosquito netting, which is made up of a piston with a male screw thread on its exterior, upon which a cylinder is screwed, which is provided with a basis with an air-entry hole, an air-closure ball, a ball retention spring and a variable-volume chamber whose covering is made up of the basis and walls of the cylinder and the piston head.

The device is situated within the roll-carrier tube, within which the cylinder slides and rotates jointly. The piston is fixed onto one of the slopes by way of clamping with a hexagonal part.

The movement of the cylinder of the device is rotary and axial with respect to its axis. The piston is fixed.

When the mosquito netting material, for instance, is extended, due to the depression that is produced within the inside of the variable-volume chamber, the atmospheric pressure overpowers the strength of the spring that retains the ball in place, and the air enters the chamber increasing its volume to the maximum. When the blind is freed so as to be closed, the cylinder turns and moves axially, rolling itself into the piston and compressing the air retained inside the chamber, which is slowly released out to the exterior due to the semi-leakproof seal of the thread between the cylinder and the lid that forms its basis. In this manner, the compressed air that is inside the chamber works as a spring that prevents the sudden closure of the blind, until its pressure is equal to the atmospheric pressure.

### DESCRIPTION OF THE DRAWINGS

As a complement to the description of the invention and with the object of improving the understanding of its characteristics, it is accompanied by a series of illustrative and non-limiting figures in which a preferred embodiment of the present invention is represented, the main components of which are the following:
(1) Slope
(2) Fixing hexagon
(3) Piston
(4) Sliding cylinder
   (4.1) Basis
   (4.2) Air entry hole
(5) O-ring gasket
(6) Spring
(7) Steel ball
(8) Air chamber
(9) Roll-carrier tube
(10) Roll-up system
(11) Spring carrier tube
(12) Spring
   (12.1) Endspring pivot
(13) Mosquito netting
(14) Rail
(15) Screw finder
(16) Terminal lid
(17) Bracket
(18) Pull-knob
(19) Latch
(20) Head
(21) Felt

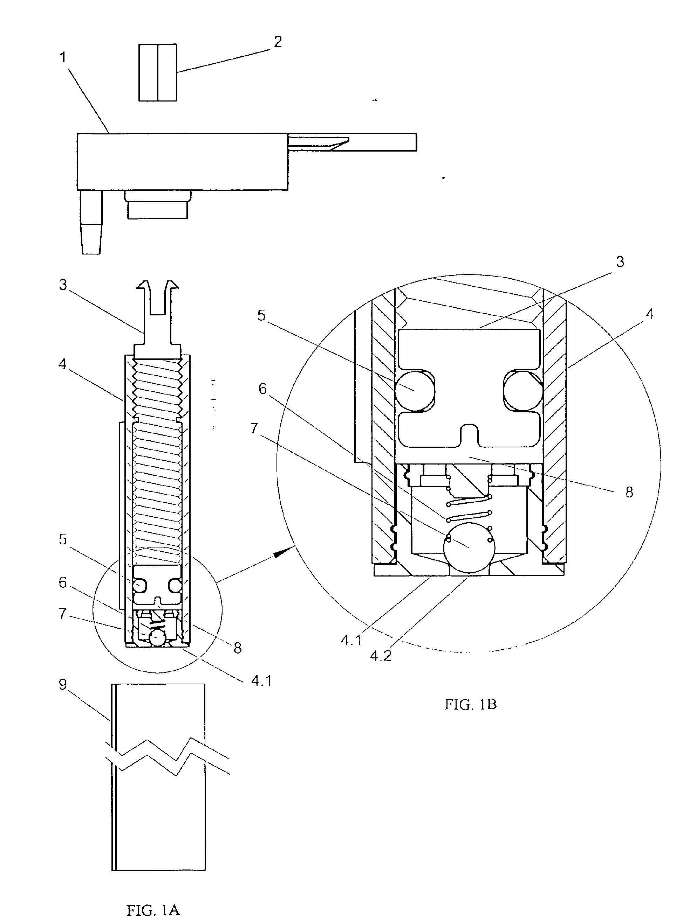

Figure 1A is a plan view of the slow return device of the present invention, mainly composed of the piston (3), the cylinder (4), the O-ring gasket (5), the spring (6) and the steel ball (7). The chamber (8) is the variable volume found between the upper dead point and the lower dead point during the trajectory of the piston (3) in the cylinder (4). In this figure, the slope (1) and the fixing hexagon (2) of the piston (3) are also visible.

Figure 1 B is an amplified detail of the area of the slow return device through which air enters, which pushes the ball (7), overpowering the strength of the spring (6). This occurs when the mosquito netting is manually extended, thereby filling the chamber with air (8).

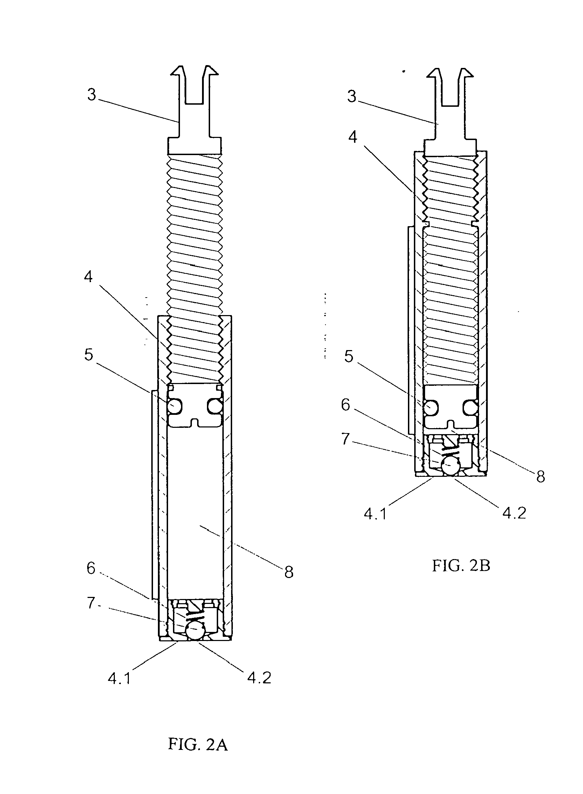

Figure 2A is a plan view of the slow return device, when the mosquito netting is totally extended.

Figure 2B is a plane view of the slow return device, when the mosquito netting is completely stowed away.

Figure 3 is a perspective drawing of the piston (3).

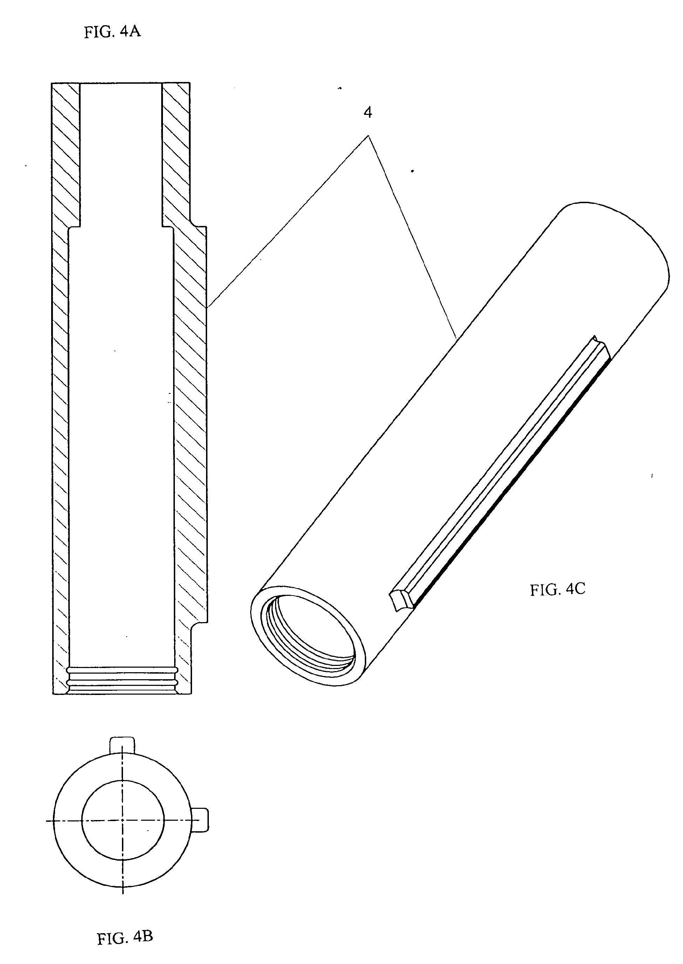

Figure 4A is the section of a plane view of the cylinder (4).

Figure 4B is a plan view of the cylinder (4).

Figure 4C is a perspective view of the cylinder (4).

Figure 5A is a perspective view of the roll-up system (10) in which its main components are shown.

Figure 5B is an amplified detail of the slow return device.

Figure 5C is a perspective view of the roll-carrier tube (9) of the mosquito netting (13) drawn separately to provide an improved understanding of the functioning of the slow return device. This tube includes the roll-carrier tube (11) lodged in its left side, and on the right side, the sliding cylinder (4).

When the mosquito netting (13) extends, the roll-carrier tube (9) turns, tensing the spring as it lowers. On the other hand, the cylinder (4) turns jointly with the tube (9) and in turn, slides axially within the same.

### PREFERRED EMBODIMENT OF THE INVENTION

A preferred embodiment of the slow return device of the present invention is described below, including specific references to the accompanying figures.

In the preferred embodiment of the invention, the slow return device for a roll-up system (10) is composed of a piston (3) with a male thread on its exterior, onto which a cylinder (4) is screwed, which is provided with a basis (4.1) with an air entrance hole (4.1), an air closing ball (7), a ball retention spring (6) and a variable-volume chamber (8) whose covering is made up of the basis (4.1) and the walls of the cylinder and the head of the piston (3).

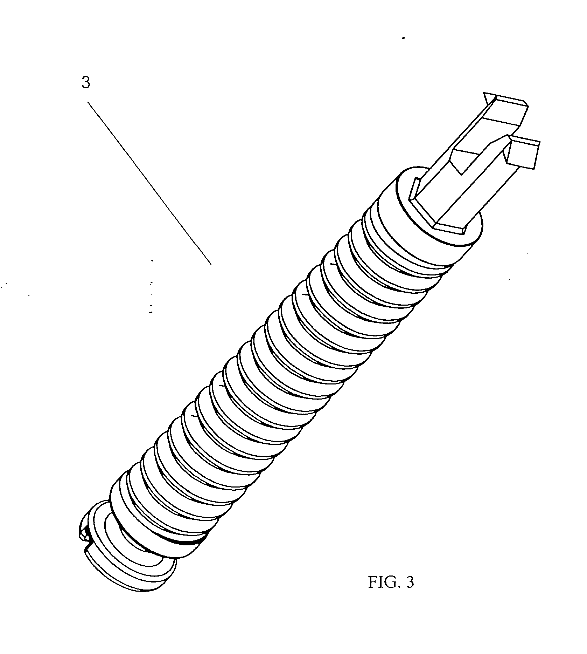

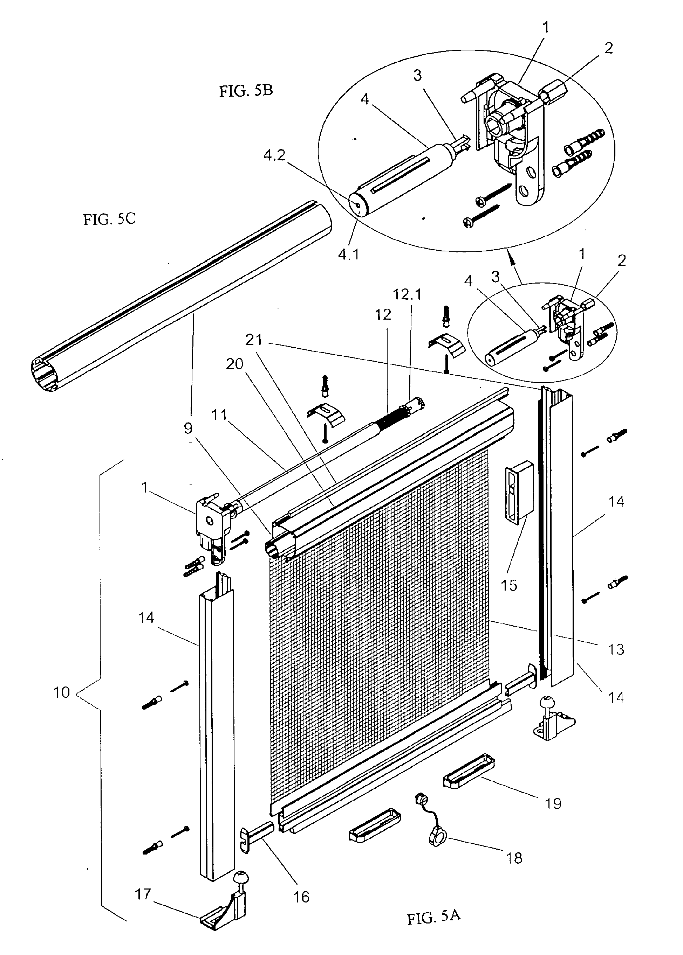

A piston (3), whose shape can be seen in perspective in figure 3, is incorporated into one of the slopes (1) of a roll-up system like the one shown in figure 5A. Its right end is provided with two symmetrical, hook-shaped appendices as a fixation foot for the slope, which upon being introduced into the inside of the fixing hexagon (2) is definitively immobilised. The device of the invention is located within the roll-carrier tube (9) within the inside of which the cylinder (4) slides and rotates jointly.

The outline of said piston (3) is threaded with a male thread. The opposite end to the appendices is a slotted head that lodges the O-ring gasket (5).

This piston (3) is provided with a cylinder (4) with a female thread at one of its ends, and upon being screwed on and off, the space found between the piston head (3) and the bottom of the cylinder (4) makes up a variable volume air chamber (8). The movement of the cylinder (4) of the device is rotational and axial in relation to its axis. The piston (3) is fixed.

The basis (4.1) of the air chamber (8) is provided with an air entry hole (4.2) at its centre, sealed within by a steel ball (7) under the pressure of a spring (6).

When the mosquito netting of the roll-up system (10), for instance, is extended, due to the depression that is produced within the inside of the variable volume chamber (8), the atmospheric pressure overpowers the strength of the spring (6) that retains the ball (7) in place, and the air enters into the chamber (8) increasing to the maximum its volume. When the blind is released in order to be closed, the cylinder (4) turns and moves axially, screwing into the piston (3) and compressing the air retained in the chamber (8), which is released slowly outwards due to the semi-leakproof seal of the threading between the cylinder (4) and the lid that makes up its basis (4.1). In this way, the compressed air that is in the chamber (8) acts as a spring that prevents the sudden closure of the blind, until its pressure becomes equivalent to atmospheric pressure.

Having sufficiently described the nature of the present invention, as well as a practical application of the same, it only needs be added that modifications may be introduced into both its shape and materials, and its production procedures, within the scope of the invention whose characteristics are claimed below.

## Claims

1. - Slow return device for roll-up systems **characterised in that** it is made up of a piston (3), a cylinder (4) and a variable volume air chamber (8) included between the walls and the basis (4.1) of the cylinder and the head of the piston (3).

2. - Slow return device for roll-up systems according to claim 1, **characterised in that** the piston (3) has the form of a threaded screw, with a head as a compression element and a foot for fixing it to the slope.

3. - Slow return device for roll-up systems according to claim 2, **characterised in that** the head of the piston (3) has an O-ring gasket (5) situated in a peripheral slot, which functions as a compression ring between the cylinder (4) and the piston (3).

4. - Slow return device for roll-up systems according to claim 2, **characterised in that** the foot of the piston (3) ends in two flexible, hook-shaped appendices.

5. - Slow return device for roll-up systems according to claim 1, **characterised in that** the cylinder (4) is provided at one end with a female thread and at the other end with a threaded base (4.1), which acts as a lid for the cylinder (4), with a hole (4.1) at its centre, blocked from within the inside of the cylinder (4) by a steel ball (7) and a spring (6).

6. - Slow return device for roll-up systems according to claim 1, **characterised in that**, when the piston (3) is screwed in and unscrewed within the cylinder (4), a variable volume air chamber (8) is formed.

7. - Slow return device for roll-up systems according to claims 1 and 5, **characterised in that** when the mosquito netting material is unrolled, the cylinder (4) is unscrewed from the piston (3), increasing the volume of the air chamber (8) and producing a depression that is sufficient to be capable of overpowering the strength of the spring (6) that puts pressure on the blocking ball (7) and allowing air to enter into the seat of said ball (7).

8. - Slow return device for roll-up systems according to claim 7, **characterised in that**, when the mosquito netting is rolled up, the cylinder (4) is screwed into the piston (3) compressing the air in the variable volume air chamber (8), said air escaping slowly through the imperfect closure between the cylinder (4) and the threaded lid that makes up its basis (4.1).
